(19) Europäisches Patentamt
European Patent Office
Office européen des brevets

(11) **EP 4 741 346 A1**

(12) **EUROPEAN PATENT APPLICATION**
published in accordance with Art. 153(4) EPC

(43) Date of publication:
**13.05.2026 Bulletin 2026/20**

(21) Application number: **24839645.9**

(22) Date of filing: **04.07.2024**

(51) International Patent Classification (IPC):
*C01F 7/54* (2006.01)     *C04B 35/553* (2006.01)

(52) Cooperative Patent Classification (CPC):
**C01F 7/54; C04B 35/553**

(86) International application number:
**PCT/JP2024/024262**

(87) International publication number:
**WO 2025/013753 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 JP 2023112343**

(71) Applicant: **Panasonic Intellectual Property
Management Co., Ltd.
Kadoma-shi, Osaka 571-0057 (JP)**

(72) Inventors:
• **YOSHIOKA, Tatsuro**
  **Kadoma-shi, Osaka 571-0057 (JP)**
• **SATO, Natsuki**
  **Kadoma-shi, Osaka 571-0057 (JP)**
• **KURIZOE, Naoki**
  **Kadoma-shi, Osaka 571-0057 (JP)**
• **SAWA, Ryosuke**
  **Kadoma-shi, Osaka 571-0057 (JP)**

(74) Representative: **Müller-Boré & Partner
Patentanwälte PartG mbB
Friedenheimer Brücke 21
80639 München (DE)**

(54) **COMPLEX FLUORIDE POWDER, METHOD FOR PRODUCING COMPLEX FLUORIDE POWDER, AND METHOD FOR MANUFACTURING STRUCTURE**

(57) A complex fluoride powder includes a plurality of complex fluoride particles containing a complex fluoride that contains an alkali metal. An average particle diameter of the plurality of complex fluoride particles is 1 $\mu$m or less, a first weight loss rate when the complex fluoride powder is heated from 30°C to 200°C is 0.5 mass% or more, and a second weight loss rate when the complex fluoride powder is heated from 200°C to 500°C is 1 mass% or less.

## FIG. 1

**Description**

TECHNICAL FIELD

The present invention relates to complex fluoride powder, a method of producing complex fluoride powder, and a method of producing a structure.

BACKGROUND ART

Conventionally, infrared transmissive windows using inorganic fluoride as a base material have been used for special applications in fields such as academic research and industry, such as window materials for physical and chemical equipment. Patent Literature 1 discloses a Fourier transform infrared spectrophotometer for measuring fluorinated gases in a sample containing corrosive gases, which includes a measuring cell with a cell window composed of one selected from the group consisting of $CaF_2$, $BaF_2$, $MgF_2$, LiF, and ZnSe.

CITATION LIST

PATENT LITERATURE

Patent Literature 1: WO 2019/176624

SUMMARY OF INVENTION

There is known a technology for sensing various gases and flames using an infrared detection element and an optical filter for infrared transmission. However, the alkali metal fluorides described above have strong hygroscopicity, and may not be suitable for general applications such as gas sensors and flame detection sensors. In addition, alkali earth metal fluorides have a high melting point of 1200 to 1500°C. Therefore, there is a possibility that a structure having a high infrared transmittance cannot be produced unless an advanced technique requiring a high temperature of at least about 1000°C is utilized.

The present invention has been made in view of such problems of the prior art. An object of the present invention is to provide a complex fluoride powder, a method of producing complex fluoride powder, and a method of producing a structure, which can form a structure suitable for applications such as an infrared transmission window for a gas sensor or a flame detection sensor.

A complex fluoride powder according to a first aspect of the present invention includes a plurality of complex fluoride particles containing a complex fluoride that contains an alkali metal. An average particle diameter of the plurality of complex fluoride particles is 1 $\mu$m or less. A first weight loss rate when the complex fluoride powder is heated from 30°C to 200°C is 0.5 mass% or more. A second weight loss rate when the complex fluoride powder is heated from 200°C to 500°C is 1 mass% or less.

A method of producing a complex fluoride powder according to a second aspect of the present invention includes a step of reacting a first metal compound, which is alkali metal fluoride, with a second metal compound including a metal different from the alkali metal fluoride, in a liquid phase to produce a plurality of complex fluoride particles; a step of separating the generated plurality of complex fluoride particles; a step of heating the separated plurality of complex fluoride particles at 200°C or higher; and a step of adding water to the heated plurality of complex fluoride particles.

A method of producing a structure according to a third aspect of the present invention includes a step of pressurizing and heating the complex fluoride powder obtained in the method of producing the complex fluoride powder.

BRIEF DESCRIPTION OF DRAWINGS

[FIG. 1] FIG. 1 is a cross-sectional view schematically illustrating an example of a structure according to the present embodiment.
[FIG. 2] FIG. 2 is an enlarged cross-sectional view schematically illustrating another example of the structure according to the present embodiment.
[FIG. 3] FIG. 3 is a SEM image of complex fluoride powder obtained in Comparative Example 1 at a magnification of 20,000.
[FIG. 4] FIG. 4 is a SEM image of the complex fluoride powder obtained in Comparative Example 2 at a magnification of 20,000.

[FIG. 5] FIG. 5 is a SEM image of the complex fluoride powder obtained in Comparative Example 4 at a magnification of 20,000.

[FIG. 6] FIG. 6 is a SEM image of the complex fluoride powder obtained in Comparative Example 5 at a magnification of 20,000.

[FIG. 7] FIG. 7 is a SEM image of the complex fluoride powder obtained in Comparative Example 6 at a magnification of 20,000.

[FIG. 8] FIG. 8 is a SEM image of the complex fluoride powder obtained in Comparative Example 7 at a magnification of 20,000.

[FIG. 9] FIG. 9 is a SEM image of the complex fluoride powder obtained in Comparative Example 8 at a magnification of 20,000.

[FIG. 10] FIG. 10 is a SEM image of the complex fluoride powder obtained in Comparative Example 9 at a magnification of 20,000.

[FIG. 11] FIG. 11 is a SEM image of the complex fluoride powder obtained in Comparative Example 10 at a magnification of 20,000.

[FIG. 12] FIG 12 is a SEM image of the complex fluoride powder obtained in Comparative Example 11 at a magnification of 20,000.

[FIG. 13] FIG. 13 is a graph illustrating the relationship between the heat treatment temperature and the average particle diameter of the complex fluoride powder to which water is added.

[FIG. 14] FIG. 14 is linear transmittance of structures according to Examples 1 to 3 and Comparative Examples 13 and 14.

[FIG. 15] FIG. 15 is linear transmittance of structures according to Examples 4 to 6, Comparative Examples 12 and 15.

[FIG. 16] FIG. 16 is a scatter plot illustrating the relationship between the average particle diameter and the linear transmittance of the complex fluoride powder according to Comparative Example.

[FIG. 17] FIG. 17 is a scatter plot illustrating the relationship between a second weight loss rate of the complex fluoride powder according to Comparative Example when heated from 200°C to 500°C and the linear transmittance.

[FIG. 18] FIG. 18 is a scatter plot illustrating the relationship between a first weight loss rate of the complex fluoride powder of Comparative Example when heated from 30°C to 200°C and the linear transmittance.

[FIG. 19] FIG. 19 is a diagram comparing the TG curve of the complex fluoride powder heat-treated at 400°C with the TG curve of the complex fluoride powder which is heat-treated at 400°C and to which water is added.

[FIG. 20] FIG. 20 is a diagram comparing the weight loss rate of the complex fluoride powder heat-treated at 400°C and the complex fluoride powder which is heat-treated at 400°C and to which water is added.

[FIG. 21] FIG. 21 is a graph illustrating the relationship between heat treatment temperature and relative density of the complex fluoride powder to which water is added.

[FIG. 22] FIG. 22 is a graph illustrating the relationship between the heat treatment temperature and the linear transmittance of the complex fluoride powder to which water is added.

[FIG. 23] FIG. 23 is a XRD pattern of powders of structures according to Examples 1 to 3 and Comparative Examples 13 and 14.

[FIG. 24] FIG. 24 is a XRD pattern of powders of structures according to Examples 4 to 6, Comparative Examples 12 and 15.

DESCRIPTION OF EMBODIMENTS

Hereinafter, complex fluoride powder, a structure, a method of producing a complex fluoride powder, and a method of producing a structure according to the present embodiment will be described in detail with reference to the drawings. Note that the dimensional ratios in the drawings are exaggerated for convenience of explanation, and may be different from the actual ratios.

[Complex fluoride powder]

First, complex fluoride powder according to the present embodiment will be described. The complex fluoride powder according to the present embodiment contains a plurality of complex fluoride particles containing a complex fluoride. The complex fluoride particles may contain 50% by mass or more, 60% by mass or more, 70% by mass or more, 80% by mass or more, 90% by mass or more, or 95% by mass or more of the complex fluoride.

The complex fluoride contains an alkali metal. The complex fluoride may contain, for example, at least one alkali metal selected from the group consisting of lithium, sodium, potassium, rubidium, and cesium. The alkali metal fluoride has high solubility in water, but the complex fluoride containing the alkali metal has low solubility in water. The solubility of the alkali metal fluoride in 100 g of water at 25°C is, for example, 0.134 g for LiF, 4.13 g for NaF, 102 g for KF, 300 g for RbF and 573 g for CsF. The solubility of the alkali metal-containing complex fluoride in 100 g of water at 25°C is, for example, 0.042 g

for $Na_3AlF_6$ and 0.025 g for $NaMgF_3$. Therefore, the alkali metal-containing complex fluoride has higher water resistance as compared with the alkali metal fluoride.

The complex fluoride may contain fluorine, an alkali metal, and an additional metal as main components. The additional metal may contain at least one metal selected from the group consisting of an alkaline earth metal, aluminum, gallium, indium, zinc and yttrium. Specifically, the additional metal may contain at least one metal selected from the group consisting of magnesium, calcium, strontium, barium, aluminum, gallium, indium, zinc and yttrium. The inorganic substance containing these metal elements can easily form a structure using a pressurized heating method as described below. Further, anisotropy of refractive index of the complex fluoride is low, so that the transmittance of infrared light can be improved. Here, the main component means that the total content of fluorine, alkali metal, and additional metal contained in the complex fluoride is 80% or more in a molar ratio. The total content may be 85% or more, 90% or more, 95% or more, or 100%.

Specifically, the complex fluoride may contain at least one of $A_3AlF_6$ and $ABF_3$ (in the composition formula, A represents one or more of the alkali metals described above, and B represents one or more of the alkaline earth metals described above). The $A_3AlF_6$ may contain, for example, at least one selected from the group consisting of $Li_3AlF_6$, $Li_2NaAlF_6$, $Li_2KAlF_6$, $Na_3AlF6$, $Na_2LiAlF_6$, $Na_2KAlF_6$, $K_3AlF_6$, $K_2LiAlF_6$, and $K_2NaAlF_6$. $ABF_3$ may contain, for example, at least one selected from the group consisting of $LiMgF_3$, $NaMgF_3$, $KMgF_3$, $LiCaF_3$, $NaCaF_3$, and $KCaF_3$. More specifically, the complex fluoride may contain at least one selected from the group consisting of $Na_3AlF_6$, $K_2NaAlF_6$, and $NaMgF_3$. $Na_3AlF_6$ and $K_2NaAlF_6$ have a cryolite crystal structure, and $NaMgF_3$ has a perovskite crystal structure, which is preferable from the viewpoint of infrared transmission because the material has a small refractive index anisotropy depending on the crystal orientation.

The complex fluoride may contain fluorine, an alkali metal, and aluminum as main components. Here, the main component means that the total content of fluorine, alkali metal, and aluminum contained in the complex fluoride is 80% or more in molar ratio. The total content may be 85% or more, 90% or more, 95% or more, or 100%. The complex fluoride may contain, for example, sodium hexafluoroaluminate ($Na_3AlF_6$). $Na_3AlF_6$ is also known as a component of cryolite. Anisotropy of refractive index of $Na_3AlF_6$ is small. Therefore, the complex fluoride has excellent transmittance of infrared light.

The complex fluoride may be partially substituted by a hydroxide ion or an oxide ion. For example, in the case of liquid-phase synthesized complex fluoride particles, a portion of the complex fluoride ion may be substituted by at least either a hydroxide ion or an oxide ion. When the complex fluoride contains a hydroxyl group, the hydroxyl group absorbs infrared light of a specific wavelength. Therefore, when a filter for a sensor is formed of complex fluoride powder, for example, the sensor sensitivity can be improved by cutting unnecessary wavelengths using the filter. When the structure formed of the complex fluoride powder contains a hydroxyl group, the change in transmittance due to humidity is reduced, and the sensor is not easily affected by humidity.

The complex fluoride may be crystalline or amorphous. The complex fluoride may be a single crystal or a polycrystal. The complex fluoride in a polycrystal is superior from the viewpoint of gas barrier property or durability. The structure may contain 50% by mass or more of complex fluoride polycrystal. In this case, the structure to be obtained has characteristics of the complex fluoride that are easily utilized. By containing 50% or more of the complex fluoride, the structure has higher moisture resistance than the alkali metal fluoride. In addition, since the ratio of parts having different refractive indices in the structure is reduced by the high mass ratio of the complex fluoride, light scattering is mitigated, and the infrared transmittance of the structure can be enhanced. In the structure, the mass ratio of the complex fluoride may be 60% or more, 70% or more, 80% or more, 90% or more, and 95% or more.

A BET specific surface area of the plurality of complex fluoride particles may be 2 to 200 $m^2/g$. When the BET specific surface area is 2 $m^2/g$ or more, and a structure is formed, the influence of light scattering inside the structure is reduced, and the transmittance of the structure can be increased. The BET specific surface area may be 3 $m^2/g$ or more, 4 $m^2/g$ or more, 5 $m^2/g$ or more, 6 $m^2/g$ or more, or 7 $m^2/g$ or more. The BET specific surface area may be 100 $m^2/g$ or less, 50 $m^2/g$ or less, 20 $m^2/g$ or less, 10 $m^2/g$ or less, or 5 $m^2/g$ or less. The BET specific surface area can be measured using a method described in the column of Examples to be described below.

The average particle diameter of the plurality of complex fluoride particles is 1 $\mu m$ or less. When the average particle diameter is 1 $\mu m$ or less, the influence of light scattering inside the structure is reduced when the structure is formed due to the small average particle diameter, and the transmittance of the structure can be increased. The average particle diameter may be 900 nm or less, 800 nm or less, 700 nm or less, 600 nm or less, or 500 nm or less. The lower limit value of the average particle diameter is not particularly limited, but the average particle diameter may be 0.01 $\mu m$ or more. The average particle diameter may be 100 nm or more, 200 nm or more, 300 nm or more, 400 nm or more, or 500 nm or more. The average particle diameter can be calculated from the BET specific surface area by using the following equation: $d=6/(\rho A_{BET})$. Here, d is average particle diameter, $\rho$ is density of the complex fluoride particles, and $A_{BET}$ is BET specific surface area.

When the complex fluoride powder is heated from 30°C to 200°C, the first weight loss rate is 0.5% by mass or more. When the first weight loss rate is 0.5% by mass or more, there tends to be a large amount of water present on the surface of the complex fluoride particles. Therefore, when the structure is molded by a pressurized heating method described below, the fluidity of the complex fluoride particles themselves and the dehydration condensation between the complex fluoride particles are promoted, thereby improving the moldability of the structure and increasing the density of the structure. As a result, the moldability of the structure can be improved. The first weight loss rate may be 1% by mass or more, 2% by mass or more, 5% by mass or more, or 10% by mass or more. The upper limit of the first weight loss rate is not particularly limited, but the first weight loss rate may be 50% by mass or less, 40% by mass or less, 30% by mass or less, 20% by mass or less, 15% by mass or less, or 10% by mass or less.

When the complex fluoride powder is heated from 200°C to 500°C, the second weight loss rate is 1% by mass or less. When the second weight loss rate is 1% by mass or less, the water content inside the complex fluoride particles is small. Therefore, when the structure is molded, the content of water molecules or hydroxy groups inside the structure decreases, and the absorption of infrared light is mitigated, so that the transmittance of infrared light increases. The second weight loss rate may be 0.5% by mass or less, 0.4% by mass or less, 0.3% by mass or less, 0.2% by mass or less, or 0.15% by mass or less. The lower limit value of the second weight loss rate is not particularly limited, but the second weight loss rate may be 0.01% by mass or more, 0.05 by mass or more, or 0.1 by mass or more.

The weight loss rate can be measured by TG (thermogravimetry) in accordance with JIS K7120-1987. The first weight loss rate can be calculated by the following formula (1): The second weight loss rate can be calculated by the following formula (2):

First weight loss rate (%) = (((mass of complex fluoride particles at 30°C) - (mass of complex fluoride particles at 200°C))/(mass of complex fluoride particles at 30°C)) $\times$ 100    (1)

Second weight loss rate (%) = (((mass of complex fluoride particles at 200°C) - (mass of complex fluoride particles at 500°C))/(mass of complex fluoride particles at 200°C)) $\times$ 100    (2)

The complex fluoride powder after heating may contain hydrated water in addition to the complex fluoride particles. The complex fluoride powder may also contain by-products, such as single fluoride containing a single metal element, oxide and hydroxide as unavoidable impurities.

The content of the complex fluoride particles in the complex fluoride powder may be 50% by mass or more. By setting the content of the complex fluoride particles to 50% by mass or more, it becomes easy to form a structure using the complex fluoride powder. The content of the complex fluoride particles in the complex fluoride powder may be 60% by mass or more, 70% by mass or more, 80% by mass or more, 90% by mass or more, or 95% by mass or more.

[Structure]

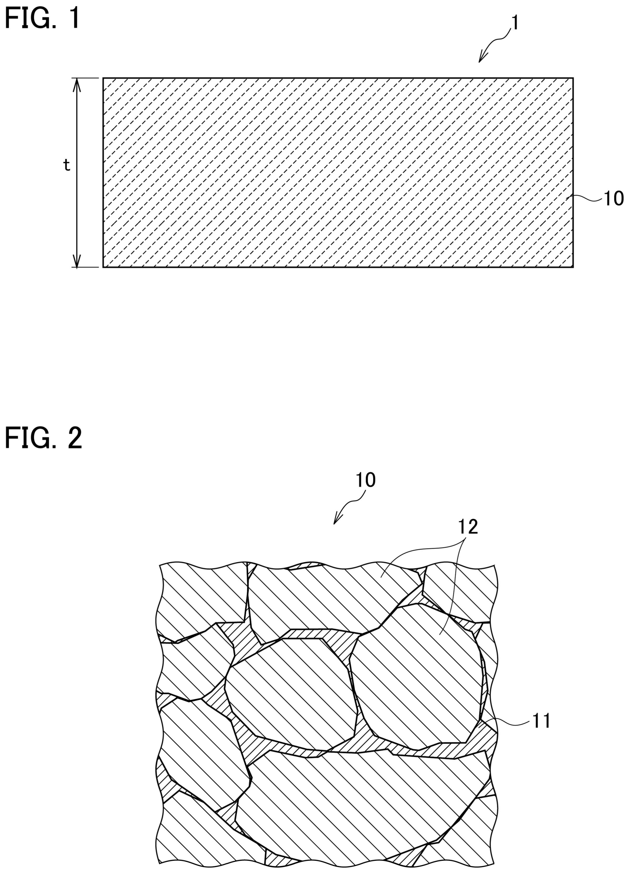

Next, a structure 1 according to the present embodiment will be described with reference to FIGS. 1 and 2. The structure 1 is a ceramic structure formed by pressurizing and heating complex fluoride powder. As illustrated in FIG. 1, the structure 1 of the present embodiment includes a base material 10. The base material 10 includes a continuous phase 11 of the complex fluoride.

The structure 1 may contain 80% by mass or more of an inorganic substance. By containing 80% by mass or more of an inorganic substance, it is possible to obtain the structure 1 which is less likely to deteriorate with the passage of time and has high infrared transmittance than when a resin is used. The inorganic substance contains the fluoride mentioned above. Further, the structure 1 may contain 85% by mass or more, 90% by mass or more, or 95% by mass or more of an inorganic substance. The structure 1 may contain 100% by mass or less of an inorganic substance.

As illustrated in FIG. 2, the base material 10 may contain the continuous phase 11 and a plurality of complex fluoride particles 12. The continuous phase 11 may exist between adjacent complex fluoride particles 12. The continuous phase 11 may bind the plurality of complex fluoride particles 12. The continuous phase 11 may be in direct contact with the complex fluoride particles 12. The continuous phase 11 may cover at least a part of the surface of the plurality of complex fluoride particles 12, or may cover the entire surface of the plurality of complex fluoride particles 12. The plurality of complex fluoride particles 12 may be bonded to each other. The complex fluoride particles 12 may be in point contact with each other, or the surfaces of the complex fluoride particles 12 may be in surface contact with each other.

The continuous phase 11 may be composed of a substance similar to the complex fluoride constituting the complex fluoride particles 12 as described above. For the complex fluoride particles 12, the matters described above for the complex fluoride particles of the complex fluoride powder may be adopted. That is, the complex fluoride particles 12 may have, for example, the same chemical properties and physical properties as the complex fluoride particles of the complex fluoride powder. For example, the inorganic substance constituting the complex fluoride particles 12 may be crystalline or amorphous. The inorganic substance constituting the complex fluoride particles 12 is preferably crystalline from the viewpoint of gas barrier property or durability. The inorganic substance constituting the complex fluoride particles 12 is preferably amorphous from the viewpoint of light transmittance. In the case of crystalline, the complex fluoride particles 12 may be monocrystalline or polycrystalline.

The average particle diameter of the plurality of complex fluoride particles 12 is preferably 1 $\mu$m or less. When the average particle diameter of the complex fluoride particles 12 is 1 $\mu$m or less, high light transmittance of the structure 1 is obtained. Further, when the average particle diameter of the complex fluoride particles 12 is within this range, the complex fluoride particles 12 are firmly bonded to each other, and the strength of the structure 1 can be enhanced. Further, when the average particle diameter of the complex fluoride particles 12 is within this range, the rate of pores existing inside the structure 1 is 30% or less, as will be described below. Further, the size of pores generated between the complex fluoride particles 12 decreases, so that the strength of the structure 1 can be enhanced. The average particle diameter of the plurality of complex fluoride particles 12 may be 900 nm or less, 800 nm or less, 700 nm or less, 600 nm or less, or 500 nm or less. The average particle diameter of the plurality of complex fluoride particles 12 may be, for example, 1 nm or more, or 10 nm or more. In the present specification, unless otherwise mentioned, the value of the "average particle diameter" is calculated as an average value of particle diameters of particles observed in several to several tens of fields of view using an observation means such as a scanning electron microscope (SEM) or a transmission electron microscope (TEM).

The structure 1 may contain impurities produced in the course of production. The impurities may be, for example, raw materials for producing the complex fluoride and may contain elements constituting the complex fluoride. The elements contained in the impurities may contain, for example, at least one element selected from the group consisting of fluorine, an alkali metal, and the additional metals described above. The impurities may contain chalcogen compounds containing oxides composed of one of metal elements, halides, hydroxides, nitrides, or carbides. The impurities may be crystalline or amorphous.

The refractive index difference between the complex fluoride and the impurities described above may be 0.1 or less. When the refractive index difference is 0.1 or less, scattering of light can be mitigated to obtain the structure 1 with high transmittance. The lower limit of the refractive index difference is not particularly limited. The refractive index difference may be 0.08 or less, or 0.04 or less.

The structure 1 may contain an organic substance such as resin particles, for example. As described below, the structure 1 can be obtained by pressurizing while heating to 100 to 300°C, so that a member having low heat resistance can be added to the structure 1. Further, the structure 1 is not limited to a member having low heat resistance such as an organic substance, but may contain an inorganic compound other than complex fluoride and impurities in order to impart functionality.

The porosity in a cross section of the structure 1 may be 30% or less. That is, the porosity of pores exceeding 0 nm in the cross section of the structure 1 may be 30% or less. Specifically, when the cross section of the structure 1 is observed, the average value of the rate of pores per unit area may be 30% or less. When the porosity is 30% or less, the pores inside the matrix portion are reduced, so that a solidified body having high strength is obtained. The porosity in the cross section of the structure 1 is preferably 20% or less, more preferably 10% or less, and even more preferably 5% or less. As the porosity in the cross section of the structure 1 becomes smaller, cracks originating from the pores are reduced, so that the strength of the structure 1 can be enhanced. Furthermore, as the porosity in the cross section of the structure 1 becomes smaller, light scattering by the pores is reduced, so that the transmittance of the structure 1 can be enhanced.

In this specification, the porosity can be obtained as follows. First, the cross section of the structure 1 is observed, and the pores and portions other than the pores are discriminated. Then, the area of the pores in the unit area is measured, and the rate of the pores per unit area is obtained. The porosity is an average value of the rate of the pores per unit area obtained at a plurality of locations. When the cross section of the structure 1 is observed, an optical microscope, a scanning electron microscope (SEM) or a transmission electron microscope (TEM) can be used. The unit area and the area of pores in the unit area may be measured by binarizing an image observed by a microscope.

The median pore diameter of the structure 1 may be 500 nm or less. When the median pore diameter is 500 nm or less, scattering of light due to the pores is mitigated, so that the structure 1 having a high transmittance is obtained. The median pore diameter is preferably 300 nm or less, more preferably 200 nm or less, and even more preferably 100 nm or less. In this specification, the median pore diameter means the pore diameter when the cumulative value of the pore diameter distribution on an area basis is 50%. The pore diameter means the diameter of a perfect circle when the shape of the pores in the cross section of the structure 1 is assumed to be a perfect circle.

In the cross section of the structure 1, the area rate of the pores having a pore diameter exceeding 500 nm is preferably 1% or less per unit area. In such a case, the scattering of light due to the pores is mitigated, so that the structure 1 has a higher transmittance. The area rate is more preferably 0.5% or less, even more preferably 0.1% or less, and particularly preferably 0.0%. The area rate of 0.0% means that no pore having a median pore diameter of more than 500 nm is observed in a unit area.

The structure 1 has infrared light transmittance. The structure 1 may have a wavelength bandwidth in which the linear transmittance is not less than a predetermined value in a target wavelength band. The linear transmittance of the structure 1 can be obtained by measuring it in a transmission method using a Fourier transform infrared spectroscopy (FT-IR) device. The linear transmittance of the infrared transmission spectrum is converted based on the Lambert-Veil law so that the linear transmittance at a thickness of 1 mm is obtained. The wavelength bandwidth can be obtained by measuring a wavelength bandwidth in which the linear transmittance is more than or equal to a predetermined value in a target wavelength band. The wavelength bandwidth may be a wavelength bandwidth in which the linear transmittance is continuously more than or equal to a predetermined value, or the wavelength bandwidth may be a total wavelength bandwidth of wavelength bandwidths in which the linear transmittance is continuously and intermittently more than or equal to a predetermined value. That is, the wavelength bandwidth is a total wavelength bandwidth in which the linear transmittance is more than or equal to a predetermined value in a target wavelength band. Therefore, when the linear transmittance intermittently exceeds a predetermined value, the wavelength bands in which the linear transmittance exceeds the predetermined value may be separated from each other in the target wavelength band. Note that the wavelength bandwidth is preferably a wavelength bandwidth in which the linear transmittance continuously exceeds the predetermined value.

In the target wavelength band of 3 $\mu$m to 10 $\mu$m, the wavelength bandwidth in which the linear transmittance per 1 mm thickness of the structure 1 continuously exceeds 60% may be 0.1 $\mu$m or more. Such a structure 1 can be expected to be used as an optical filter for infrared transmission. Note that the target wavelength band may be 3.8 $\mu$m or more. The target wavelength band may be 8 $\mu$m or less, 6 $\mu$m or less, and 4.4 $\mu$m or less. The wavelength band width in which the linear transmittance is 60% or more may be 0.5 $\mu$m or more, 1 $\mu$m or more, 1.5 $\mu$m or more, and 2 $\mu$m or more. The wavelength band width in which the linear transmittance is 60% or more may be 3 $\mu$m or less, 2 $\mu$m or less, 1 $\mu$m or less, and 0.6 $\mu$m or less. The linear transmittance in the wavelength band as described above may be 65% or more. The upper limit of the linear transmittance in the wavelength bandwidth is not particularly limited, and for example, 100%.

At a wavelength of 4 $\mu$m, the linear transmittance per 1 mm thickness of the structure 1 may be 60% or more, or 65% or more. In the wavelength range of 3.8 $\mu$m to 4.4 $\mu$m, the average value of the linear transmittance per 1 mm thickness of the structure 1 may be 60% or more, or 65% or more. In the entire wavelength range of 3.8 to 4.4 $\mu$m, the average value of the linear transmittance per 1 mm thickness of the structure 1 may be 60% or more, or 65% or more.

A thickness t of the structure 1 may be 10 $\mu$m or more. The structure 1 according to the present embodiment is formed in a pressurized heating method, as will be described below. Therefore, a bulk body having a thickness of 10 $\mu$m or more can be easily formed without forming the structure 1 by laminating thin films. Note that the thickness of the structure 1 may be 100 $\mu$m or more, 500 $\mu$m or more, 1 mm or more, or 1 cm or more. The upper limit of the thickness of the structure 1 is not particularly limited, but may be, for example, 50 cm.

The structure 1 may be, for example, an infrared transmission filter. By using the structure 1 as an infrared transmission filter, it is possible to provide an infrared detection device, a light emitting device, and the like that can reduce irregular reflection of infrared light due to pores. When the structure 1 is a single layer and can transmit light in a specific infrared region, it is possible to transmit specific infrared light without laminating a plurality of dielectrics or separately providing a light shielding filter to improve sensor sensitivity, for example, like an interference filter.

When the structure 1 is used as an infrared transmission filter, the shape of the structure 1 is not particularly limited. The structure 1 may have a shape of a flat plate, a concave lens, or a convex lens. When the structure 1 has a lens shape, it is possible to cause light rays to be incident perpendicularly on a dielectric laminated bandpass filter, so that the dependence of that dielectric laminated bandpass filter on the incident angle of light rays can be canceled. Further, a fine structure having an anti-reflection function may be formed on the surface of the structure 1.

The structure 1 may be used for an infrared detection device which is a flame sensor for detecting a flame. That is, the infrared detection device may include the structure 1 which is an infrared transmission filter. Infrared light emitted from a flame or the like passes through the structure 1, and the flame can be detected using infrared light emitted from the flame. The infrared detection device may also be used for a human sensor, a biological sensor, a crime prevention sensor, a gas sensor, a non-contact thermometer, a solid-state imaging device, a camera module, and the like.

The structure 1 may also be used for a light emitting device. That is, the light emitting device may include the structure 1. The light including infrared rays emitted from a light source is partially cut by the structure 1, and the remaining light of the infrared rays passes through the structure 1. Therefore, the light emitting device according to the present embodiment can emit light having a specific wavelength. The light-emitting device can be used for, for example, a light-emitting device for gas detection, a light-emitting device for inspection, a light-emitting device for monitoring camera, a light-emitting device for hair removal, a light-emitting device for curing an infrared curable resin, and the like.

[Method of Producing Complex fluoride powder]

Next, a method of producing complex fluoride powder according to the present embodiment will be described. The method of producing complex fluoride powder according to the present embodiment includes a step of producing a plurality of complex fluoride particles, a step of separating the complex fluoride particles, a step of heating the complex fluoride particles, and a step of adding water to the complex fluoride particles.

In the step of producing a plurality of complex fluoride particles, a first metal compound, which is alkali metal fluoride, and a second metal compound having a metal different from the alkali metal fluoride are mixed and reacted in a liquid phase to produce a plurality of complex fluoride particles.

The method of mixing the alkali metal fluoride and the second metal compound is not particularly limited, and a dry mixing or wet mixing method may be used. The solutions may be mixed by adding a second metal compound solution to the alkali metal fluoride solution, or the solutions may be mixed by adding an alkali metal fluoride solution to the second metal compound solution. Alternatively, both solutions may be simultaneously mixed in equal amounts by using a microchannel or the like. For example, water may be used as a solvent.

The concentration of a mixture of the alkali metal fluoride and the second metal compound can be adjusted, as appropriate. The concentration of the alkali metal fluoride may be 100mM or more, or 200mM or more. The concentration of the alkali metal fluoride may be 1000mM or less. The concentration of the second metal compound may be 20mM or more, or 40mM or more. The concentration of the second metal compound may be 200mM or less. The larger the concentration of the raw materials, the smaller the particle diameter tends to be, so that transmittance of the structure 1 can be improved.

Examples of alkali metals contained in the alkali metal fluoride include lithium, sodium, potassium, rubidium, and cesium. Specifically, the alkali metal fluoride may contain at least one alkali metal selected from the group consisting of lithium fluoride, sodium fluoride, potassium fluoride, rubidium fluoride, and cesium fluoride.

The second metal compound may be at least one selected from the group consisting of metal chloride, metal nitrate, metal sulfate and metal organic acid salt, and may include metal salt excluding metal fluoride. The metal contained in the second metal compound may be at least one selected from the group consisting of alkaline earth metals, aluminum, gallium, indium, zinc, and yttrium. The second metal compound may contain, for example, aluminum chloride.

In the method of producing the complex fluoride powder, hydrofluoric acid need not be used. Hydrofluoric acid is highly corrosive and melts glass, and there are restrictions on the equipment used. Hydrofluoric acid is highly toxic, and safety measures are also required. However, in the method of producing the complex fluoride powder according to the present embodiment, the complex fluoride particles are produced by reacting a first metal compound, which is alkali metal fluoride with a second metal compound. Therefore, hydrofluoric acid need not be used, and glass or the like can be used, so that the method of producing the complex fluoride powder according to the present embodiment is safer as compared with a case using hydrofluoric acid.

In the step of separating complex fluoride particles, the plurality of produced complex fluoride particles are separated. Alkali metal chlorides, nitrates, sulfates, and metal organic acid salts are produced as by-products in addition to the complex fluoride during mixture of the alkali metal fluoride and the second metal compound when the second metal compound is a metal chloride, a metal nitrate, a metal sulfate, or a metal organic acid salt. Therefore, a washing operation to remove the by-products may be carried out. The alkali metal compound may be removed, for example, by washing with a solvent such as water during filtration or centrifugation.

In the heating step, a plurality of separated complex fluoride particles are heated at 200°C or higher. By setting the heating temperature to 200°C or higher, the water content inside the complex fluoride particles decreases. As a result, the absorption of infrared light by the hydroxyl groups and water inside the structure 1 decreases, and the transmittance of the structure 1 can increase. The heating temperature of the complex fluoride particles may be 300°C or higher, 350°C or higher, 400°C or higher, 450°C or higher, or 500°C or higher. The heating temperature of the complex fluoride particles may be 900°C or lower, 800°C or lower, 700°C or lower, 600°C or lower, or 550°C or lower. The heating time of the complex fluoride particles may be 0.5 hours or more, 1 hour or more, or 1.5 hours or more. The heating time of the complex fluoride particles may be 24 hours or less, 12 hours or less, 6 hours or less, or 3 hours or less.

In the method of producing the complex fluoride powder, after separating the complex fluoride particles, the complex fluoride particles may be dried before heating at 200°C or higher. The drying temperature is not particularly limited, but the complex fluoride particles may be dried at a temperature equal to or lower than the melting point of the complex fluoride. The drying temperature may be, for example, 40°C or higher, 80°C or higher, 100°C or higher, or 200°C or higher. The drying temperature may be, for example, 600°C or lower, 400°C or lower, 300°C or lower, 250°C or lower, or 200°C or lower. The drying time of the complex fluoride particles may be 0.5 hours or more, 1 hour or more, or 1.5 hours or more. The drying time of the complex fluoride particles may be 24 hours or less, 12 hours or less, 6 hours or less, or 3 hours or less.

In the step of adding water, water is added to a plurality of heated complex fluoride particles. As described above, when the complex fluoride particles are heated, the water content inside the complex fluoride particles decreases, but the fluidity during the heating and pressurizing process, which is described below, is low, and the structure 1 is not easily formed. Therefore, in the method of producing the complex fluoride powder according to the present embodiment, the plurality of heated complex fluoride particles are hydrolyzed. Thus, the amount of adsorbed water on the surface of the complex fluoride particles can increase while the water content inside the complex fluoride particles is kept small. Thus, the fluidity during the heating and pressurizing process is high, and the structure 1 can be easily formed. In addition, by increasing the fluidity during the heating and pressurizing process, the structure 1 can be formed with high density.

The amount of water to be added to the complex fluoride particles may be 0.5% by mass or more based on the complex fluoride particles. The amount of water to be added to the complex fluoride particles may be 1% by mass or more, 2% by mass or more, 5% by mass or more, or 10% by mass or more based on the complex fluoride particles. The amount of water to be added to the complex fluoride particles may be 50% by mass or less, 40% by mass or less, 30% by mass or less, 20% by mass or less, 15% by mass or less, or 10% by mass or less based on the complex fluoride particles.

[Method of Producing Structure]

Next, a method of producing the structure 1 according to the present embodiment will be described. The structure 1 can be produced by pressurizing and heating the complex fluoride powder described above. By using the pressurizing and heating method, the complex fluoride particles are bonded to each other while being deformed, so that the structure 1 having a small porosity can be formed.

The complex fluoride powder containing the complex fluoride particles is filled in a mold. After the complex fluoride powder is filled in the mold, the mold may be heated as necessary. Then, by applying pressure to the complex fluoride powder inside the mold, the inside of the mold becomes a high-pressure state. In this state, the complex fluoride powder is densified, and simultaneously, the complex fluoride particles are bonded to each other.

The heating and pressurizing conditions are not particularly limited as long as the densification of the complex fluoride particles proceeds. For example, it is preferable that the complex fluoride powder is heated to 50 to 300°C, and then pressurized at a pressure of 10 to 600 MPa. The complex fluoride powder is preferably heated to a temperature of 80 to 250°C, and more preferably to a temperature of 100 to 200°C. The pressure at which the complex fluoride powder is pressurized is more preferably 50 to 600 MPa.

The structure 1 can be obtained by taking out the molded body from the inside of the mold. It is considered that by pressurizing complex fluoride powder containing complex fluoride particles, which contains at least one of hydroxyl groups or water molecules, while heating, the complex fluoride particles react with each other via hydroxyl groups or water molecules to form the continuous phase 11 of polycrystalline complex fluoride containing alkali metal. Thus, the structure 1 described above can be formed.

By the reaction caused by pressurizing and heating as described above, the structure 1 having a dense structure can be obtained. Further, as a method of forming an aggregate of inorganic particles, a method of forming a compact by pressing only powder of inorganic particles and then sintering at a high temperature (for example, 1700°C or higher) can be considered. However, even if the compact of inorganic particles is sintered at a high temperature, there will be many pores in the structure 1 to be obtained, which not only causes insufficient mechanical strength but also causes insufficient transmittance due to scattering of light. In addition, when the inorganic particles are sintered at a high temperature, precise temperature control is required, which increases the production cost.

In the method of producing the structure 1 according to the present embodiment, the complex fluoride powder containing complex fluoride particles, which contains at least one of a hydroxyl group or a water molecule, is pressurized while heating, so that the structure 1 having a high density and excellent transmittance can be obtained. Furthermore, in the method of producing the structure 1 according to the present embodiment, the structure 1 can be obtained by pressurizing while heating at 50°C to 300°C, so that precise temperature control is not required, and the production cost can be reduced.

As described above, the method of producing the structure 1 according to the present embodiment includes a step of pressurizing and heating the complex fluoride powder. According to the method of producing the structure 1 according to the present embodiment, the structure 1 described above can be produced in a simple low-temperature process.

[Example]

Hereinafter, the present embodiment will be described in more detail with reference to Examples and Comparative Examples, but the present embodiment is not limited to the Examples.

Comparative Example 1

First, sodium hexafluoroaluminate ($Na_3AlF_6$) was synthesized. Specifically, 64 mmol of sodium fluoride (NaF) powder (Fujifilm Wako Pure Chemical Corporation, Reagent Special Grade), 8 mmol of aluminum chloride ($AlCl_3 \cdot 6H_2O$) powder (Fujifilm Wako Pure Chemical Corporation, Reagent Special Grade), and 100 mL of $H_2O$ were mixed. The mixture was stirred at 28°C for 20 hours. The stirred liquid was filtered by suction using a membrane filter having a pore size of 0.1 $\mu$m, and the residue was dried at -60 to -100 kPa and 80°C for 2 hours to obtain $Na_3AlF_6$ particles (complex fluoride powder).

Comparative Example 2

A complex fluoride powder was prepared in the same manner as in Comparative Example 1 except that 24 mmol of NaF powder and 3 mmol of $AlCl_3 \cdot 6H_2O$ powder were used.

Comparative Example 3

The residue was dried at -60 to -100 kPa at 200°C for 2 hours. Then, the obtained powder was ground in a mortar and heat-treated in air at 400°C for 2 hours to obtain a complex fluoride powder. Except for the above, a complex fluoride powder was prepared in the same manner as in Comparative Example 2.

Comparative Example 4

A complex fluoride powder was prepared in the same manner as in Comparative Example 2, except that the residue was dried at -60 to -100 kPa and 80°C for 2 hours, the resulting powder was ground in a mortar, and heat treated at 300°C in air for 2 hours to obtain a complex fluoride powder.

Comparative Example 5

A complex fluoride powder was prepared in the same manner as in Comparative Example 4, except that the heat treatment temperature was 400°C.

Comparative Example 6

A complex fluoride powder was prepared in the same manner as in Comparative Example 4, except that the heat treatment temperature was 500°C.

Comparative Example 7

A complex fluoride powder was prepared in the same manner as in Comparative Example 4 except that the heat treatment temperature was 600°C.

Comparative Example 8

A complex fluoride powder was prepared in the same manner as in Comparative Example 1 except that after drying the residue, the obtained powder was ground in a mortar and heat treated at 300°C for 2 hours in air to obtain a complex fluoride powder.

Comparative Example 9

A complex fluoride powder was prepared in the same manner as in Comparative Example 8 except that the heat treatment temperature was set to 400°C.

Comparative Example 10

A complex fluoride powder was prepared in the same manner as in Comparative Example 8 except that the heat treatment temperature was set to 500°C.

Comparative Example 11

A complex fluoride powder was prepared in the same manner as in Comparative Example 8 except that the heat treatment temperature was set to 600°C.

[Evaluation]

Observation of Powder

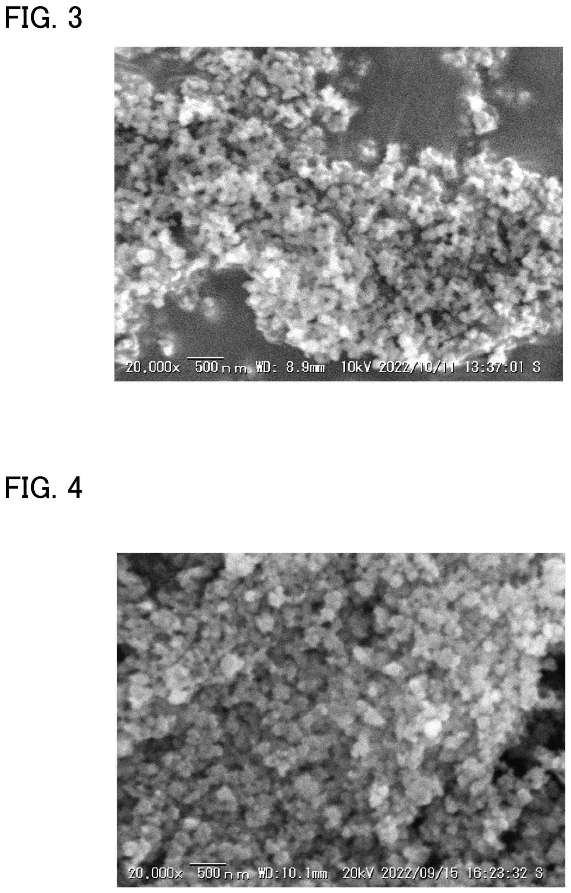

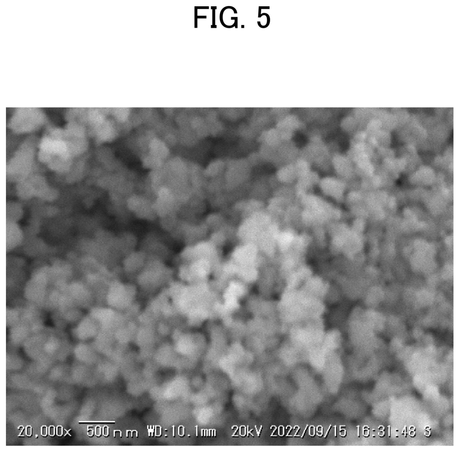

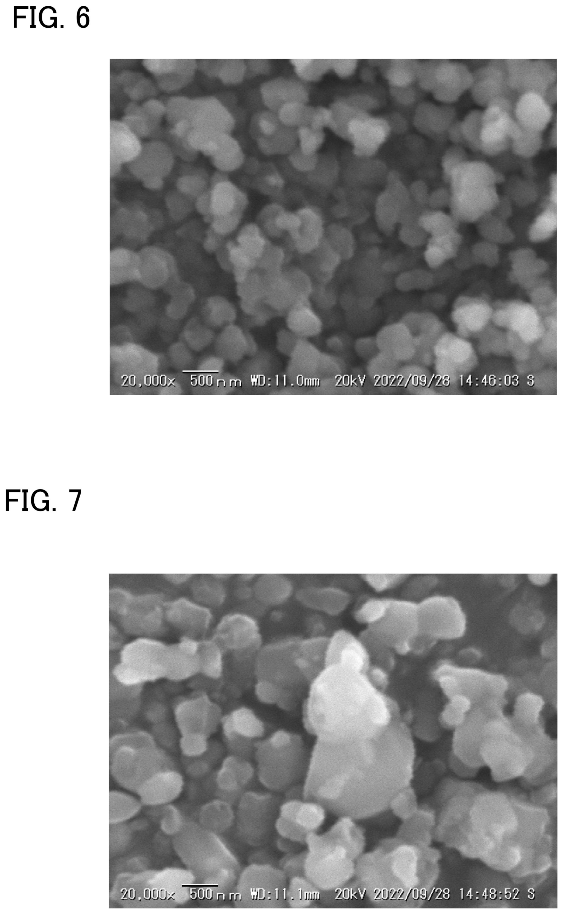

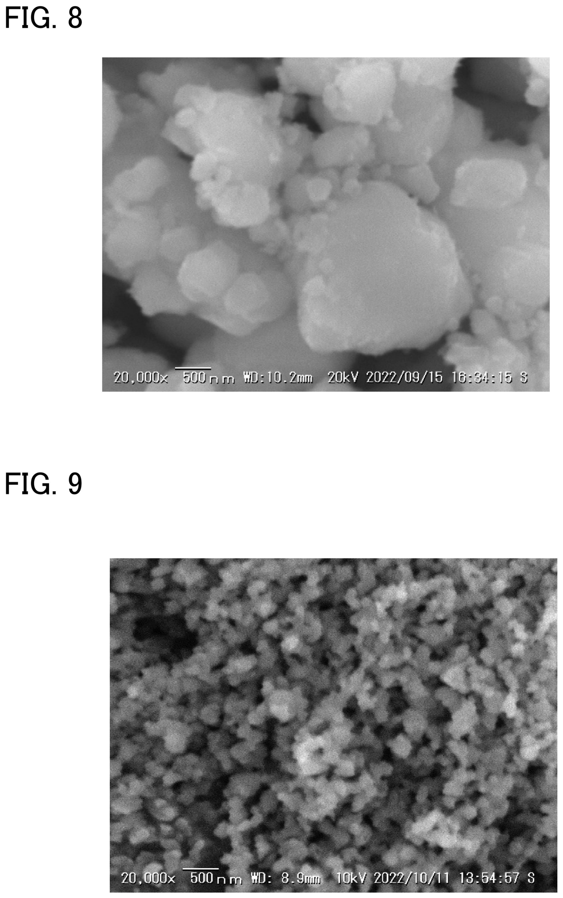

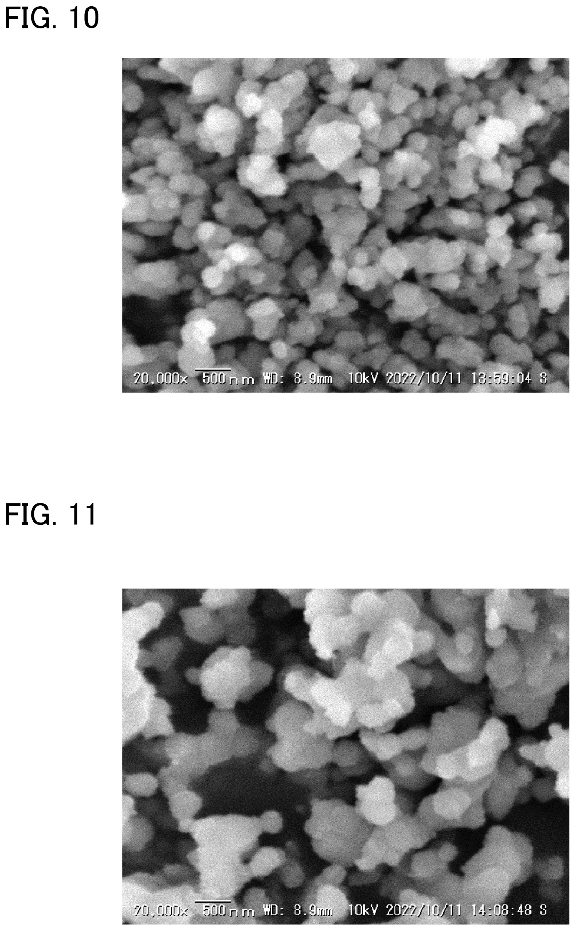

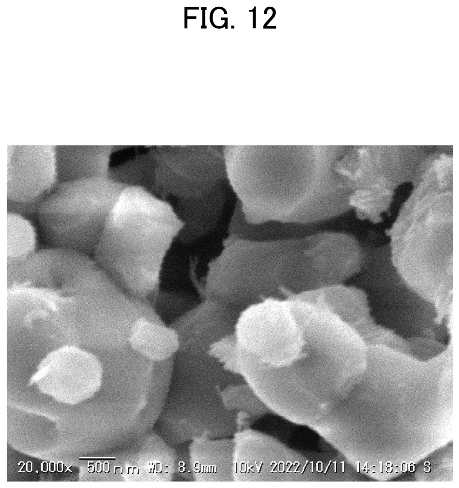

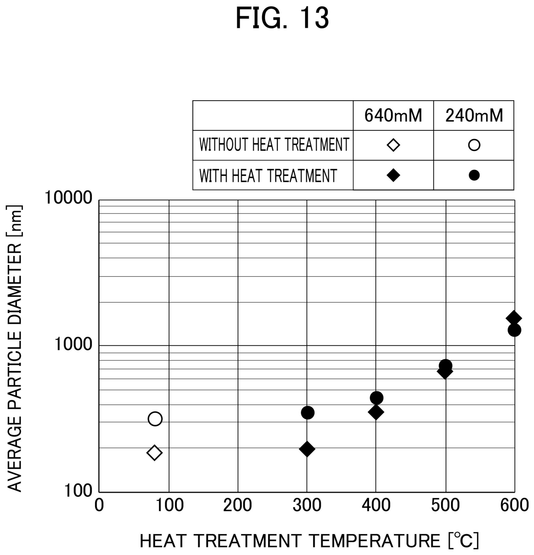

The surface of the synthesized complex fluoride powder was observed at a magnification of 20,000 using a scanning electron microscope (SEM). SEM images of the complex fluoride powders obtained in Comparative Examples 1 and 2 and Comparative Examples 4 to 11 are shown in FIGS. 3 to 12. FIG. 13 is a graph illustrating the relationship between the heat treatment temperature and the average particle diameter.

Specific Surface Area

The adsorption isotherm of nitrogen gas at 77K was measured in a constant volume method using a specific surface area measurement device, and a BET specific surface area was obtained from the adsorption isotherm using the BET equation. The results are shown in Table 1.

Average Particle Diameter

Assuming that the particles were spherical, the average particle diameter was calculated from the BET specific surface area obtained as described above using the equation $d = 6/(\rho A_{BET})$. The results are shown in Table 1. In the equation above, $A_{BET}$ is the BET specific surface area, $\rho$ is the density of the complex fluoride particles, and $d$ is the average particle diameter. As the density, 2.98 g/cm$^3$, which is the density of cryolite ($Na_3AlF_6$), was used.

Weight loss rate

The weight loss rate of the powder was measured using a thermogravimetric (TG) device. Specifically, a test sample of 15 to 20 mg powder was placed in an aluminum container and heated at 10°C/min from 30°C to 560°C with dry air flowing in at 20 mL/min. Then, the first weight loss rate from 30°C to 200°C and the second weight loss rate from 200°C to 500°C were calculated. Specifically, the first weight loss rate from 30°C to 200°C was calculated by dividing the weight loss of the sample at 200°C by the weight of the sample at 30°C. This result is shown in Table 1 as the first weight loss rate. Similarly, the second weight loss rate from 200°C to 500°C was calculated by dividing the weight loss of the sample at 500°C by the weight of the sample at 200°C. This result is shown in Table 1 as the second weight loss rate.

Linear Transmittance

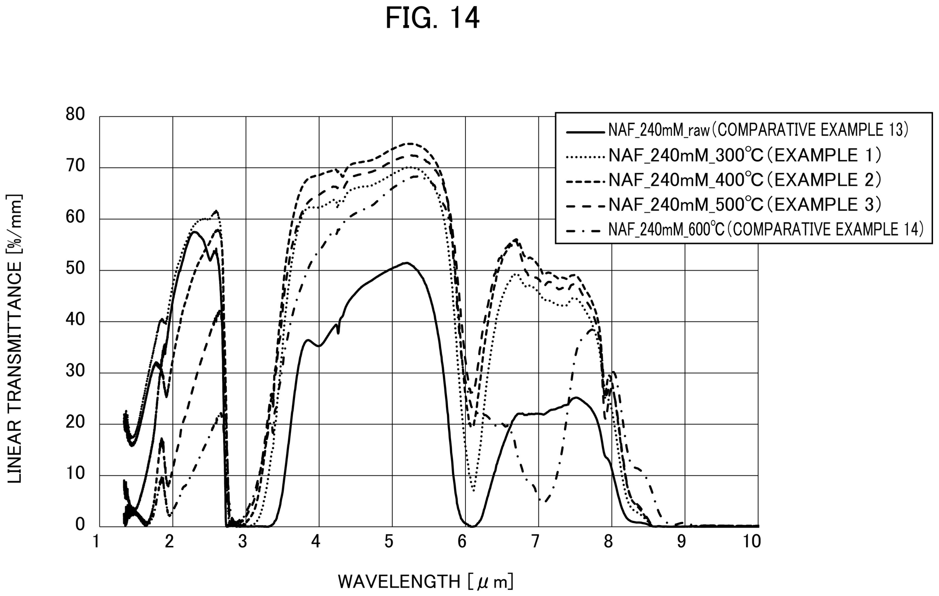

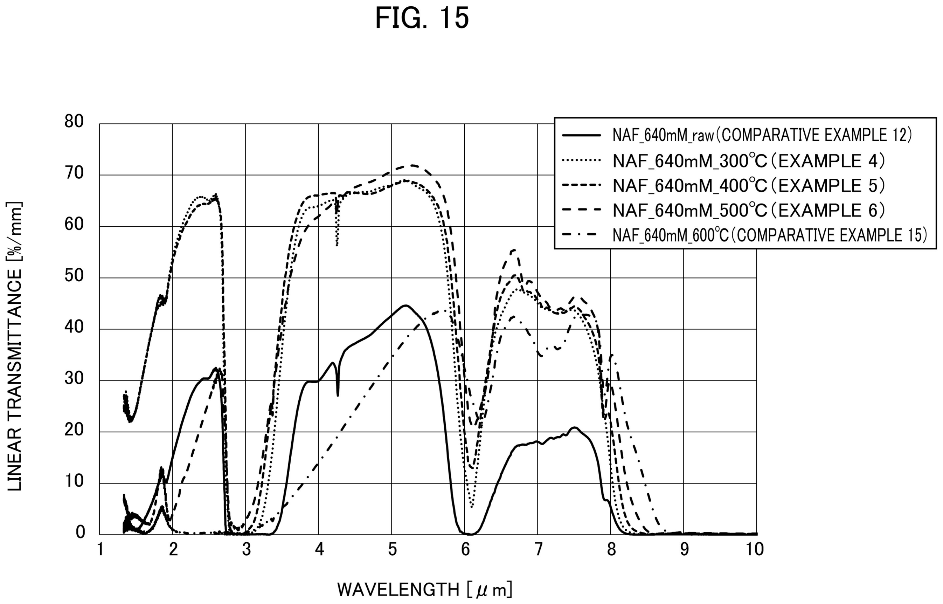

First, complex fluoride powder was charged into a cylindrical mold (Φ12) having an internal space. The complex fluoride powder was heated and pressurized under conditions of 180°C and 400 MPa for 20 minutes. Thus, a test sample of a cylindrical solidified structure was obtained. The test sample was measured in a transmission method using an FT-IR device, and infrared transmission spectra were obtained. The results are shown in FIGS. 14 and 15. The linear transmittance of the infrared transmission spectra was converted based on the Lambert-Veil law so that the linear transmittance at a thickness of 1 mm was obtained. Table 1 shows the average linear transmittance at wavelengths from 3.8 μm to 4.4 μm.

[Table 1]

| | NaF [mM] | AlCl$_3$ [mM] | Drying Temperature [°C] | Heat Treatment Temperature [°C] | Water Addition | Specific Surface Area [m$^2$/g] | Average Particle Size [nm] | Linear Transmittance 3.8-4.4μm [%] | First Weight Loss Ratio [%] | 2nd Weight Loss Ratio [%] | Formability |
|---|---|---|---|---|---|---|---|---|---|---|---|
| Comparative Example 1 | 640 | 80 | 80 | - | None | 10.60 | 190 | 35 | 0.76 | 1.36 | Good |
| Comparative Example 2 | 240 | 30 | 80 | - | None | 6.25 | 322 | 28 | 1.10 | 2.08 | Good |
| Comparative Example 3 | 240 | 30 | 200 | 400 | None | 4.94 | 408 | 71 | 0.14 | 0.21 | No |
| Comparative Example 4 | 240 | 30 | 80 | 300 | None | 5.66 | 356 | 63 | 0.21 | 0.56 | No |
| Comparative Example 5 | 240 | 30 | 80 | 400 | None | 4.47 | 451 | 71 | 0.19 | 0.24 | No |
| Comparative Example 6 | 240 | 30 | 80 | 500 | None | 2.72 | 741 | 68 | 0.11 | 0.20 | No |
| Comparative Example 7 | 240 | 30 | 80 | 600 | None | 1.55 | 1302 | 15 | 0.08 | 0.13 | No |
| Comparative Example 8 | 640 | 80 | 80 | 300 | None | 10.12 | 199 | 66 | 0.23 | 0.33 | No |
| Comparative Example 9 | 640 | 80 | 80 | 400 | None | 5.67 | 355 | 67 | - | - | No |
| Comparative Example 10 | 640 | 80 | 80 | 500 | None | 3.00 | 672 | 63 | 0.19 | 0.30 | No |
| Comparative Example 11 | 640 | 80 | 80 | 600 | None | 1.30 | 1544 | 15 | 0.08 | 0.09 | No |

EP 4 741 346 A1

As shown in Table 1 and FIG. 13, when the heat treatment temperature is the same, the higher the raw material concentration during synthesis, the smaller the average particle diameter. In addition, as shown in Table 1 and FIG. 13, when the raw material concentration during synthesis is the same, the higher the heat treatment temperature, the larger the average particle diameter. That is, as shown in Table 1, when the raw material concentration during synthesis is the same, the higher the heat treatment temperature, the smaller the BET specific surface area.

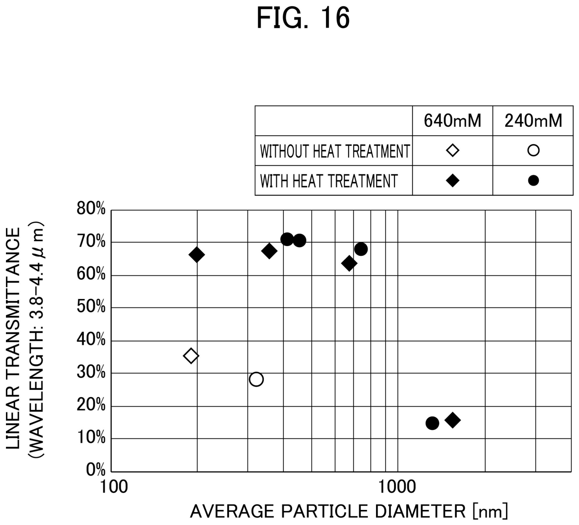

As shown in Table 1 and FIG. 16, from the comparison of Comparative Examples 1 to 6 and Comparative Examples 8 to 10 with Comparative Examples 7 and 11, it is understood that the linear transmittance increases when the average particle diameter of the complex fluoride powder is 1 μm or less. This suggests that a smaller average particle diameter reduces the impact of light scattering within the structure, leading to higher linear transmittance in the solidified structure.

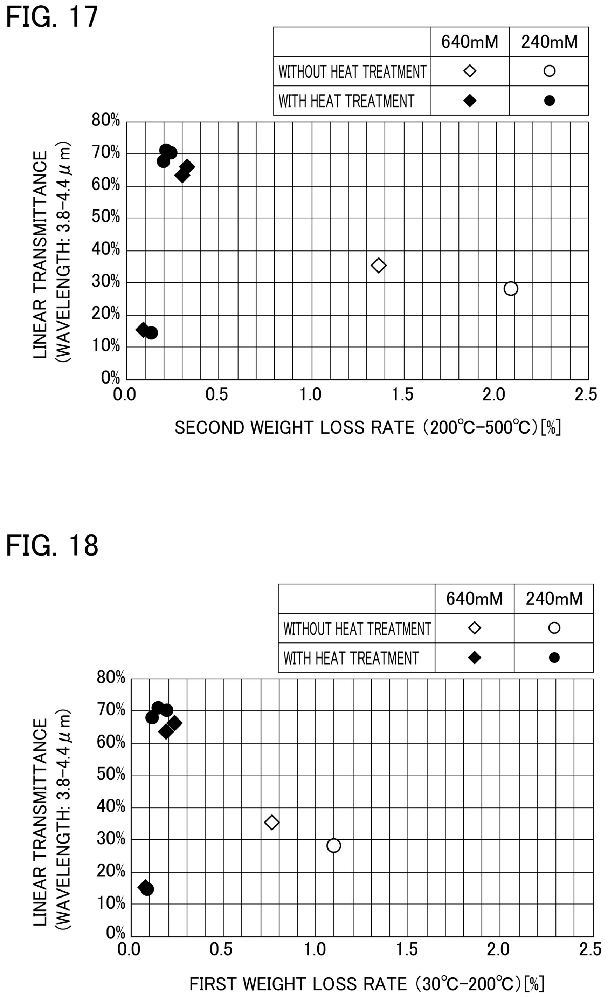

As shown in Table 1 and FIG. 16, from the comparison of Comparative Examples 3 to 6 and Comparative Examples 8 to 10 with Comparative Examples 1 to 2, it is understood that the structure formed of the heat-treated complex fluoride powder has a higher linear transmittance than the structure formed of the non-heat-treated complex fluoride powder. As shown in Table 1 and FIG. 17, the second weight loss rate in the heat-treated Comparative Examples 3 to 11 when heated from 200°C to 500°C was 1 mass% or less, which was smaller than that in the non-heat-treated Comparative Examples 1 to 2. This suggest that the absorption of infrared light by hydroxyl groups and water decreased as a result of the reduction of the water content inside the complex fluoride particles by the heat treatment, and the linear transmittance increased.

However, the moldability of the solidified structure of the complex fluoride powders of Comparative Examples 3 to 11 subjected to the heat treatment was not as good as that of the complex fluoride powders of Comparative Examples 1 and 2 without the heat treatment. As shown in Table 1 and FIG. 18, the first weight loss rate of Comparative Examples 3 to 11 subjected to the heat treatment when heated from 30°C to 200°C was 0.5 mass% or less, which was smaller than that of Comparative Examples 1 to 2 without the heat treatment. Therefore, it suggested that the moldability of the structure was not good as a result of the reduction of the amount of adsorbed water on the particle surface by the heat treatment.

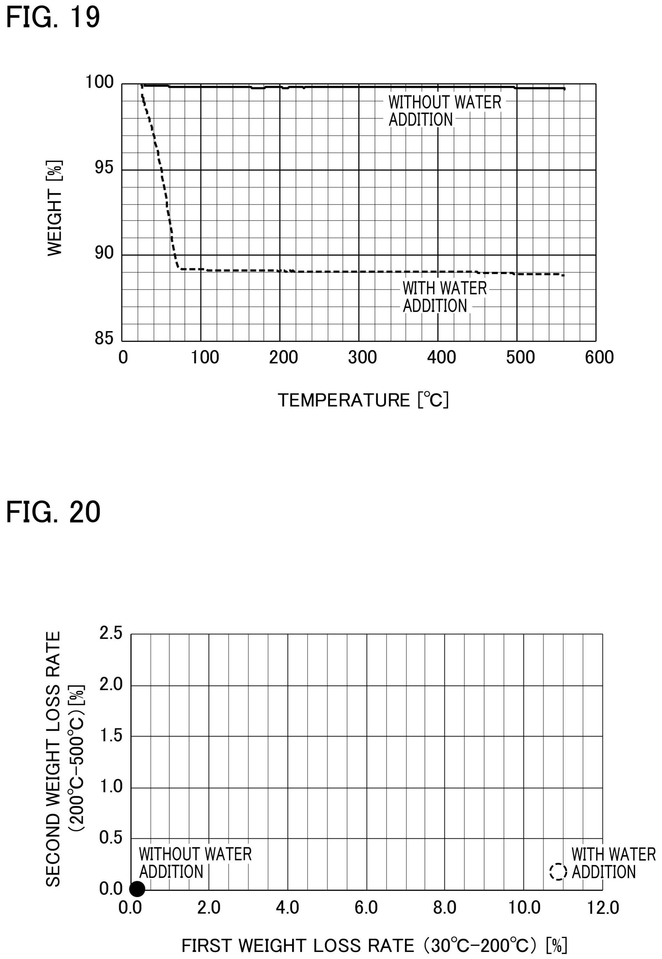

Therefore, an attempt was made to increase the amount of adsorbed water on the particle surface by adding 10% by mass of water to the complex fluoride particles of Comparative Example 5 heat-treated at 400°C, and a structure having good moldability was obtained. Therefore, a thermogravimetric (TG) device was used to measure the weight loss of a sample with water addition and without water addition under the same conditions as described above. The results are illustrated in Fig. 19. FIG. 20 shows the measurement results of the first weight loss rate when the samples were heated from 30°C to 200°C, and the second weight loss rate when the samples were heated from 200°C to 500°C.

As illustrated in FIGS. 19 and 20, the first weight loss rate of the complex fluoride powder with water addition was 0.5% or more. The second weight loss rate of the complex fluoride powder with water addition was 1% or less. The results suggest that a structure having excellent linear transmittance and good moldability can be obtained by setting the first weight loss rate to 0.5% or more, and the second weight loss rate to 1% or less. To verify this, the following complex fluoride powder was prepared.

Example 1

The complex fluoride powder was prepared in the same manner as in Comparative Example 4 except that the heat treatment temperature was 300°C. Next, 10% by mass of water was added to the complex fluoride particles to obtain the powder as the complex fluoride powder according to this example.

Example 2

A powder obtained by adding 10% by mass of water to the complex fluoride particles according to Comparative Example 5 was used as the complex fluoride powder according to this example.

Example 3

A powder obtained by adding 10% by mass of water to the complex fluoride particles according to Comparative Example 6 was used as the complex fluoride powder according to this example.

Example 4

A powder obtained by adding 10% by mass of water to the complex fluoride particles according to Comparative Example 8 was used as the complex fluoride powder according to this example.

Example 5

A powder obtained by adding 10% by mass of water to the complex fluoride particles according to Comparative Example 9 was used as the complex fluoride powder according to this example.

Example 6

A powder obtained by adding 10% by mass of water to the complex fluoride particles according to Comparative Example 10 was used as the complex fluoride powder according to this example.

Comparative Example 12

A powder obtained by adding 10% by mass of water to the complex fluoride particles according to Comparative Example 1 was used as the complex fluoride powder according to this example.

Comparative Example 13

A powder obtained by adding 10% by mass of water to the complex fluoride particles according to Comparative Example 2 was used as the complex fluoride powder according to this example.

Comparative Example 14

A powder obtained by adding 10% by mass of water to the complex fluoride particles according to Comparative Example 7 was used as the complex fluoride powder according to this example.

Comparative Example 15

A powder obtained by adding 10% by mass of water to the complex fluoride particles according to Comparative Example 11 was used as the complex fluoride powder according to this example.

[Evaluation]

Specific surface area, average particle diameter, weight loss rate, and linear transmittance were measured using the same method as described above. Relative density was measured as follows.

Relative Density

First, a structure was prepared from the complex fluoride powders obtained in each example in the same manner as described above. Next, the volume and mass of the structure were measured, and the apparent density of the structure was calculated. Then, the relative density of the structure was calculated by dividing the apparent density of the test sample by the density of cryolite ($2.98$ g/cm$^3$).

[Table 2]

| | NaF [mM] | AlCl$_3$ [mM] | Drying Temperature [°C] | Heat Treatment Temperature [°C] | Water Addition | Specific Surface Area [m$^2$/g] | Average Particle Size [nm] | Linear Transmittance 3.8-4.4$\mu$m [%] | Relative Density [%] | Formability |
|---|---|---|---|---|---|---|---|---|---|---|
| Example 1 | 240 | 30 | 80 | 300 | Yes | 5.66 | 356 | 63.0 | 84 | Good |
| Example 2 | 240 | 30 | 80 | 400 | Yes | 4.47 | 451 | 69.0 | 86 | Good |
| Example 3 | 240 | 30 | 80 | 500 | Yes | 2.72 | 741 | 65.0 | 89 | Good |
| Example 4 | 640 | 80 | 80 | 300 | Yes | 10.12 | 199 | 64.0 | 85 | Good |
| Example 5 | 640 | 80 | 80 | 400 | Yes | 5.67 | 355 | 66.0 | 84 | Good |
| Example 6 | 640 | 80 | 80 | 500 | Yes | 3.00 | 672 | 62.9 | 82 | Good |
| Comparison 12 | 640 | 80 | 80 | - | Yes | 10.60 | 190 | 31.5 | 88 | Good |
| Comparison 13 | 240 | 30 | 80 | - | Yes | 6.25 | 322 | 38.0 | 86 | Good |
| Comparison 14 | 240 | 30 | 80 | 600 | Yes | 1.55 | 1302 | 55.0 | 88 | Good |
| Comparison 15 | 640 | 80 | 80 | 600 | Yes | 1.30 | 1544 | 15.7 | 77 | Good |

From the results of FIGS. 19 and 20, it is considered that also in the complex fluoride powders according to Examples 1 to 6 and Comparative Examples 12 to 15, the first weight loss rate was 0.5 mass% or more, and the second weight loss rate was 1 mass% or less.

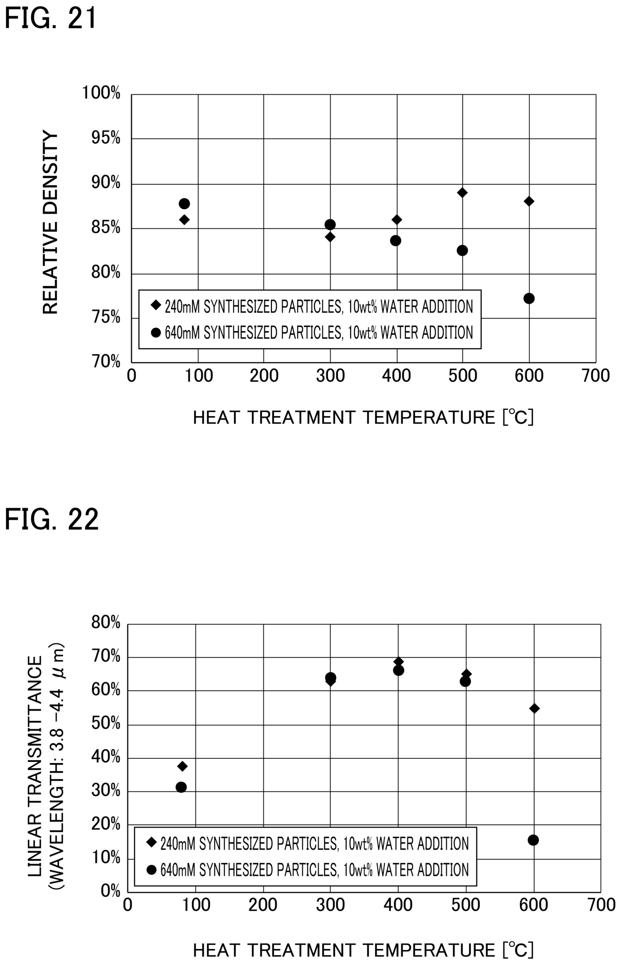

All the structures according to Examples 1 to 6 and Comparative Examples 12 to 15 had good moldability. As shown in Table 2 and FIG. 21, the relative density of each example was 70% or more, and it was confirmed that the structures were dense. Furthermore, as shown in Table 2 and FIG. 22, it was confirmed that the structures formed of the complex fluoride powders according to Examples 1 to 6 had sufficient linear transmittance.

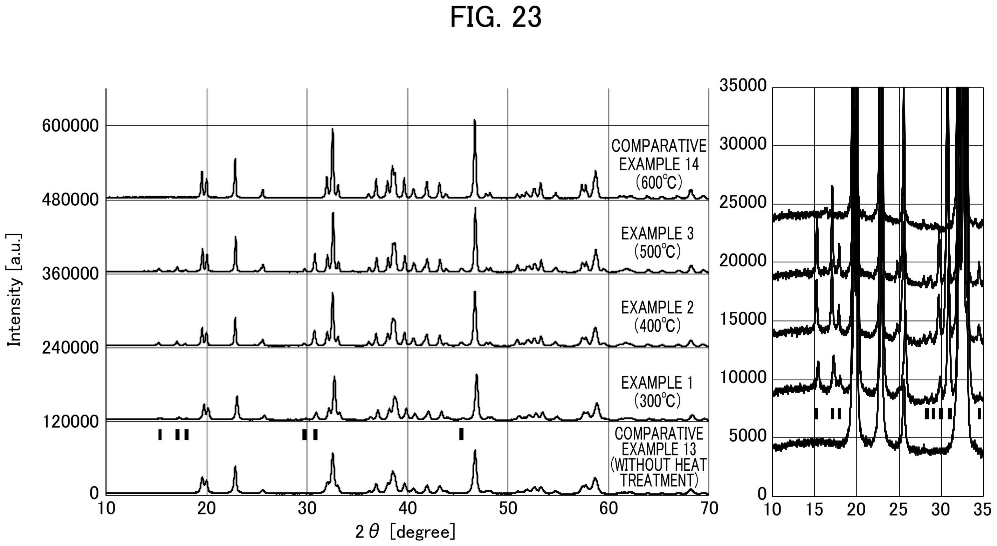

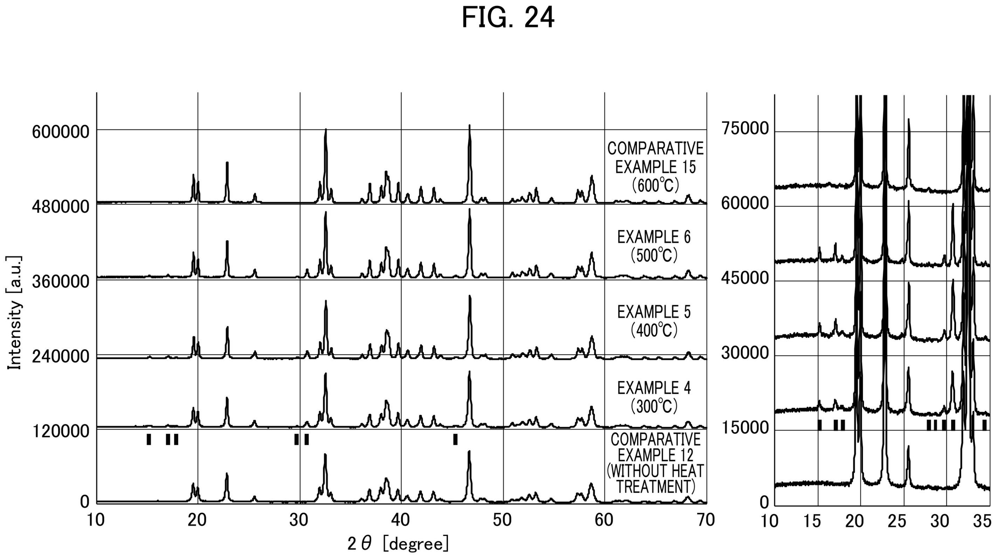

Next, powders obtained by pulverizing the structures according to Examples 1 to 6 and Comparative Examples 12 to 15 were measured using a powder X-ray diffraction (XRD) device, and XRD patterns were obtained. The results are illustrated in FIGS. 23 and 24. It was confirmed that the main phase was $Na_3AlF_6$ in each of the examples although a different phase ($Na_5Al_3F_{14}$) existed when the heat treatment temperature was 300°C to 500°C, as shown in FIGS. 23 and 24. Then, it was confirmed that the structure contained at least 95% by mass or more of polycrystalline $Na_3AlF_6$.

From the results above, it was confirmed that the structure excellent in linear transmittance was formed satisfactorily when the average particle diameter of the complex fluoride particles was 1 $\mu$m or less, the first weight loss rate was 0.5% by mass or more, and the second weight loss rate was 1% by mass or less.

Note

The description of the embodiments above discloses the following technologies.

Technology 1

A complex fluoride powder comprising a plurality of complex fluoride particles containing a complex fluoride that contains an alkali metal, wherein an average particle diameter of the plurality of complex fluoride particles is 1 $\mu$m or less, a first weight loss rate when the complex fluoride powder is heated from 30°C to 200°C is 0.5 mass% or more, and a second weight loss rate when the complex fluoride powder is heated from 200°C to 500°C is 1 mass% or less.

With this configuration, the structure is not easily soluble in water, and the structure can be produced in a simple low-temperature process. Therefore, the structure is suitable for applications such as infrared transmission windows for gas sensors and flame detection sensors.

Technology 2

The complex fluoride powder according to Technology 1, in which the plurality of complex fluoride particles have a BET specific surface area of 2 to 200 $m^2/g$. With this configuration, when the structure is formed, the influence of light scattering inside the structure can be reduced. Therefore, the transmittance of the structure can be increased.

Technology 3

The complex fluoride powder according to Technology 1 or 2, wherein the complex fluoride contains fluorine, the alkali metal, and an additional metal, and the additional metal contains at least one metal selected from the group consisting of an alkaline earth metal, aluminum, gallium, indium, zinc, and yttrium. Such a complex fluoride can reduce the anisotropy of the refractive index. Therefore, transmittance of infrared light can be improved.

Technology 4

The complex fluoride powder according to any one of Technologies 1 to 3, in which the complex fluoride contains fluorine, the alkali metal, and aluminum. Such a complex fluoride can reduce the anisotropy of the refractive index. Therefore, the transmittance of infrared light can be improved.

Technology 5

A method of producing a complex fluoride powder according to any one of Technologies 1 to 4, comprising: a step of reacting a first metal compound, which is alkali metal fluoride, with a second metal compound including a metal different from the alkali metal fluoride, in a liquid phase to produce a plurality of complex fluoride particles; a step of separating the generated plurality of complex fluoride particles; a step of heating the separated plurality of complex fluoride particles at 200°C or higher; and a step of adding water to the heated plurality of complex fluoride particles. This production method enables easy production of the complex fluoride powder described above.

Technology 6

The method of producing a complex fluoride powder according to Technology 5, in which hydrofluoric acid is not used. With this configuration, the complex fluoride powder can be produced without using hydrofluoric acid. Therefore, glass or the like can be used in this highly safe method as compared with a method using hydrofluoric acid.

Technology 7

A method of producing a structure comprising a step of pressurizing and heating the complex fluoride powder obtained by the method of producing the complex fluoride powder according to Technology 5 or 6. With this configuration, the structure can be produced in a simple low-temperature process, and the structure is not easily soluble in water. The structure is suitable for applications such as infrared transmission windows for gas sensors and flame detection sensors.
The entire contents of Japanese Patent Application Publication No. 2023-112343 (filed on July 7, 2023) are incorporated herein by reference.
The present embodiments have been described above, but the present embodiments are not limited thereto, and various modifications are possible within the scope of the present embodiments.

INDUSTRIAL APPLICABILITY

According to the present disclosure, it is possible to provide a complex fluoride powder, a method of producing the complex fluoride powder, and a method of producing the structure, which can form a structure suitable for applications such as an infrared transmission window for a gas sensor or a flame detection sensor.

REFERENCE SIGNS LIST

1    Structure
10    Base material
11    Continuous phase

**Claims**

1. A complex fluoride powder comprising a plurality of complex fluoride particles containing a complex fluoride that contains an alkali metal, wherein

   an average particle diameter of the plurality of complex fluoride particles is 1 $\mu$m or less,
   a first weight loss rate when the complex fluoride powder is heated from 30°C to 200°C is 0.5 mass% or more, and
   a second weight loss rate when the complex fluoride powder is heated from 200°C to 500°C is 1 mass% or less.

2. The complex fluoride powder according to claim 1, wherein the plurality of complex fluoride particles have a BET specific surface area of 2 to 200 $m^2/g$.

3. The complex fluoride powder according to claim 1 or 2, wherein

   the complex fluoride contains fluorine, the alkali metal, and an additional metal, and
   the additional metal contains at least one metal selected from the group consisting of an alkaline earth metal, aluminum, gallium, indium, zinc, and yttrium.

4. The complex fluoride powder according to any one of claims 1 to 3, wherein the complex fluoride contains fluorine, the alkali metal, and aluminum.

5. A method of producing a complex fluoride powder according to any one of claims 1 to 4, comprising:

   a step of reacting a first metal compound, which is alkali metal fluoride, with a second metal compound including a metal different from the alkali metal fluoride, in a liquid phase to produce a plurality of complex fluoride particles;
   a step of separating the generated plurality of complex fluoride particles;
   a step of heating the separated plurality of complex fluoride particles at 200°C or higher; and

a step of adding water to the heated plurality of complex fluoride particles.

6.  The method of producing a complex fluoride powder according to claim 5, wherein hydrofluoric acid is not used.

7.  A method of producing a structure comprising a step of pressurizing and heating the complex fluoride powder obtained by the method of producing the complex fluoride powder according to claim 5 or 6.

FIG. 1

FIG. 2

FIG. 3

FIG. 4

# FIG. 5

FIG. 6

FIG. 7

## FIG. 8

## FIG. 9

## FIG. 10

## FIG. 11

## FIG. 12

# FIG. 13

FIG. 14

## FIG. 15

Legend:
- NAF_640mM_raw (COMPARATIVE EXAMPLE 12)
- NAF_640mM_300°C (EXAMPLE 4)
- NAF_640mM_400°C (EXAMPLE 5)
- NAF_640mM_500°C (EXAMPLE 6)
- NAF_640mM_600°C (COMPARATIVE EXAMPLE 15)

X-axis: WAVELENGTH [μm]
Y-axis: LINEAR TRANSMITTANCE [%/mm]

# FIG. 16

| | 640mM | 240mM |
|---|---|---|
| WITHOUT HEAT TREATMENT | ◇ | ○ |
| WITH HEAT TREATMENT | ◆ | ● |

## FIG. 17

|  | 640mM | 240mM |
|---|---|---|
| WITHOUT HEAT TREATMENT | ◇ | ○ |
| WITH HEAT TREATMENT | ◆ | ● |

LINEAR TRANSMITTANCE (WAVELENGTH: 3.8–4.4 μm)

SECOND WEIGHT LOSS RATE (200℃–500℃) [%]

## FIG. 18

|  | 640mM | 240mM |
|---|---|---|
| WITHOUT HEAT TREATMENT | ◇ | ○ |
| WITH HEAT TREATMENT | ◆ | ● |

LINEAR TRANSMITTANCE (WAVELENGTH: 3.8–4.4 μm)

FIRST WEIGHT LOSS RATE (30℃–200℃) [%]

## FIG. 19

## FIG. 20

## FIG. 21

## FIG. 22

FIG. 23

COMPARATIVE EXAMPLE 14 (600°C)

EXAMPLE 3 (500°C)

EXAMPLE 2 (400°C)

EXAMPLE 1 (300°C)

COMPARATIVE EXAMPLE 13 (WITHOUT HEAT TREATMENT)

Intensity [a.u.]

$2\theta$ [degree]

# FIG. 24

EP 4 741 346 A1

EP 4 741 346 A1

## INTERNATIONAL SEARCH REPORT

| International application No. |
|---|
| **PCT/JP2024/024262** |

**A. CLASSIFICATION OF SUBJECT MATTER**

*C01F 7/54*(2006.01)i; *C04B 35/553*(2006.01)i
FI: C01F7/54: C04B35/553

According to International Patent Classification (IPC) or to both national classification and IPC

**B. FIELDS SEARCHED**

Minimum documentation searched (classification system followed by classification symbols)

C01F7/54: C04B35/553

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | CN 112159657 A (CHANGCHUN INSTITUTE OF OPTICS, FINE MECHANICS AND PHYSICS, CHINESE ACADEMY OF SCIENCES) 01 January 2021 (2021-01-01) entire text | 1-7 |
| P, X | WO 2024/018928 A1 (PANASONIC INTELLECTUAL PROPERTY MANAGEMENT CO., LTD.) 25 January 2024 (2024-01-25) examples 9-11 | 1-7 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/024262**

| Patent document cited in search report | Publication date (day/month/year) | Patent family member(s) | Publication date (day/month/year) |
|---|---|---|---|
| CN 112159657 A | 01 January 2021 | (Family: none) | |
| WO 2024/018928 A1 | 25 January 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019176624 A
- JP 2023112343 A